# EUROPÄISCHE PATENTANMELDUNG

(11) **EP 2 075 604 A1**
(43) Veröffentlichungstag der Anmeldung: **01.07.2009**
(21) Anmeldenummer: 08021955.3
(22) Anmeldetag: 18.12.2008
(51) Int. Cl.: G02B 6/38, G02B 6/42

(54) **RJ-45 kompatible elektrooptische Hybrid-Steckverbindung**

(30) Priorität: 24.12.2007 DE 102007062658
(71) Anmelder: Bktel Communications Gmbh, 41836 Hückelhoven-Baal (DE)
(72) Erfinder: Meyers, Norbert, 41372 Niederkrüchten (DE)
(74) Vertreter: Vomberg, Friedhelm

(57) **Zusammenfassung**

Die Erfindung betrifft eine Hybrid-Steckverbindung mit einem Gehäuse, das eine Kavität für die Aufnahme eines normierten RJ-45-Steckers aufweist, der entlang einer Steckrichtung einsteckbar ist, und das eine zusätzliche Aufnahme für mindestens ein weiteres optisches Kabel, vorzugsweise eine Polymer Optische Faser (POF) oder eine zusätzliche Aufnahme für mindestens einen Kollimator mit angeschlossenem Lichtwellenleiter aufweist, das mit einem Transceiver durch eine Schubbewegung entlang derselben Steckrichtung verbindbar ist.

Insbesondere mit der Zielsetzung einer möglichst geringen Gehäusegröße und einer preiswerten Herstellung wird vorgeschlagen, dass der RJ-45-Stecker und die Kavität eine bis zu einem hinter dem Gehäuse angeordneten Transceiver reichende Durchführung aufweisen, in der ein optisches Kabel, nämlich eine POF oder ein Kollimator mit angeschlossenem Lichtwellenleiter mittels eines Klemmelementes ohne weitere Steckverbinder lösbar fixierbar ist.

## Beschreibung

Die Erfindung betrifft eine Hybrid-Steckverbindung mit einem Gehäuse, das eine Kavität für die Aufnahme eines normierten RJ-45-Steckers aufweist, der entlang einer Steckrichtung einsteckbar ist, und das eine zusätzliche Aufnahme für mindestens ein weiteres optisches Kabel, vorzugsweise eine Polymer Optische Faser (POF) aufweist, das mit einem Transceiver durch eine Schubbewegung entlang derselben Steckrichtung verbindbar ist.

Eine solche Steckverbindung ist beispielsweise aus der WO 03/093888 A1 bekannt.

Im Bereich der Computervernetzungstechnik sind vielfältige elektrische und optische Steckverbinder gebräuchlich. Im Haus- und Bürobereich hat sich die Ethernet-Übertragungstechnik auf elektrischen Leitungen durchgesetzt. Die hier verwendeten Twisted Pair Kabel transportieren auf bis zu 4 Aderpaaren die standardisierten Datenraten Fast-, Gigabit-, und 10-Gigabit-Ethernet über eine Länge von bis zu 100 m. Diese Reichweite und Datenraten sind im Eigenheim und im kleinen Bürogebäude ausreichend. Für größere Gebäudekomplexe mit Reichweiten, die größer als 300 m sind, müssen Lichtwellenleiter eingesetzt werden. Hierzu hat sich die hybride Verkabelung mit Lichtwellenleitern im Steigbereich und mit Kupferkabeln in den Etagen durchgesetzt. Bei Firmengeländen mit mehreren Gebäuden wird auch der Zugang zu den einzelnen Häusern mittels Glasfaserkabeln erschlossen.

Kupferkabel haben gegenüber Lichtwellenleitern erhebliche Nachteile, nämlich ein hohes Gewicht, einen großen Platzbedarf und eine elektromagnetische Empfindlichkeit. Auch wenn Lichtwellenleiter solche Nachteile nicht besitzen, konnten sie bisher die kupferbasierenden Netzwerke nicht verdrängen. Dies liegt vorwiegend an den kleinen Glasfaserdurchmessern, die zu einem höheren Montageaufwand bei der Steckerkonfektionierung und beim Spleißen führen. Die optischen Steckverbinder sind aufgrund der Genauigkeitsanforderungen im Sub-Mikrometerbereich teurer als vergleichbare Kupfersteckverbinder. Hinzukommen die Kosten für aufwendige Messsysteme, die von erfahrenen Monteuren mit entsprechendem Know-How in der optischen Übertragungstechnik eingesetzt werden.

Polymer-Optische Fasern sind Kunststoff-Lichtwellenleiter, die beispielsweise aus Polymethylmethacrylat (PMMA) bestehen. Sie besitzen zum einen die Vorzüge der Glasfasern, d. h. ein geringes Gewicht, eine relativ hohe Flexibilität und eine Unempfindlichkeit gegenüber elektromagnetischen Einflüssen, andererseits sind sie in einer größeren Dicke von ca. 1 mm herstellbar, was den Nachteil einer gegenüber Glasfasern höheren Dämpfung aufwiegt. Aufgrund des größeren Außendurchmessers im Millimeterbereich sind die Anforderungen an die Endflächengüte von Klemm-, Steck-und Spleißverbindungen deutlich geringer und führen zu preiswerteren Verbindungen, die auch von Nicht-Fachleuten hergestellt werden können. Bisherige Anwendungsbereiche der POF sind der Automobilbau und auch die Audio-Übertragungstechnik. Es ist abzusehen, dass eine weitere Verbesserung der Übertragungsparameter der Standard SI (Stufenindex)-POF zu einer noch breiteten Anwendung der POF-Leiter führt, die zunehmend die funk- oder drahtgebundenen Netzwerke im Eigenheim ersetzen können.

Ein Hemmnis für die schnelle Verbreitung der POF-Netzwerke sind die derzeit millionenfach vorhandenen Endgeräte, die lediglich kupferbasierte RJ-45-Schnittstellen zur Ethernet-Datenkommunikation bereitstellen.

Zwar wird in der Zukunft ein Ausweg über POF-Medienumsetzer geboten, die über ein RJ-45-Patchkabel an eine vorhandene Ethernet Kupferschnittstelle angeschlossen werden und intern die elektrooptische Umsetzung des Ethernetdatensignals durchführen. Das gewandelte Ethernetdatensignal wird an einer POF-Schnittstelle in Steck- oder Klemmtechnik als Lichtsignal bereitgestellt. Mit zwei POF-Medienumsetzern können zwei konventionelle Endgeräte mit RJ-45 Ethernet-Schnittstellen über ein POF-Kabel verbunden werden. Diese POF-Applikation wird insbesondere zur Datenverbindung zwischen DSL-Modem im Verdrahtungsraum und WLAN-Router im Wohnzimmer benutzt. Das dünne flexible POF-Kabel eignet sich auch zur nachträglichen unauffälligen Verlegung im Wohnbereich.

Derzeit kommen auch erste Endgeräte mit integrierter POF-Schnittstelle auf den Markt. Einige Hersteller liefern DSL-Router mit bis zu 4 RJ-45 und einem POF-Anschluss zur Anbindung an das lokale Netzwerk. Dies ist sicher ein erster Schritt, um den Weg für die POF-Vernetzung zu ebnen. Auf lange Sicht ist es jedoch erforderlich, mehrere POF-Schnittstellen in den zentralen DSL-Router oder in ähnliche Endgeräte zu integrieren, um ohne Zusatzgeräte wie Medienumsetzer direkt ein sternförmiges POF-Hausnetzwerk zu versorgen.

Da in der Übergangszeit vom Kupfer- bis zum optischen Netzwerk viele Gebäude mit hybriden Netzwerken in gemischter Twisted Pair- und Lichtwellenleitertechnik ausgestattet sind, ist es vorteilhaft, alle vorhandenen RJ-45 LAN-Geräteschnittstellen zusätzlich mit POF-Schnittstellen auszurüsten.

Erste Hybrid-Verbindungssysteme werden beispielsweise in der EP 1 102 099 beschrieben. In dieser Druckschrift wird ein Buchsengehäuse vorgeschlagen, in dem sowohl Lichtleiterkabel als auch Kabel für die Übertragung elektrischer Signale nebeneinander geführt werden. Nachteiligerweise ist dieses Hybrid-Verbindungssystem verhältnismäßig voluminös. Eine Verwendung von RJ-45-Steckern ist nicht möglich.

Eine alternative Lösung wird in der WO 03/093888 A1 vorgeschlagen. Die dort beschriebene Hydrid-Steckbuchse besitzt ein Gehäuse mit einer Kavität für die Aufnahme eines normierten RJ-45-Steckers, ferner eine am Gehäuse angebrachte zusätzliche Kabelführungsplatte zur Aufnahme von elektrischen und/oder optischen Bauteilen, zu denen Aussparungen oder Durchführungskanäle zur Aufnahme elektrischer oder optischer Stecker führen. Bei der derart gestalteten Hybrid-Steckbuchse können parallel sowohl der RJ-45-Stecker als auch Lichtwellenleiterstecker in entsprechend vorgesehene Aufnahmen gleichzeitig geschoben werden. Der Nachteil einer solchen Konstruktion liegt nach wie vor in einer relativ großen Baugröße sowie einer aufwendigen Bauweise.

Es ist Aufgabe der vorliegenden Erfindung, eine neue Hybrid-Steckverbindung zu schaffen, die eine möglichst geringe Gehäusegröße besitzt und die preiswert herstellbar ist. Neben den RJ-45-LAN-Ports sollen zusätzlich POF-Ports nutzbar gemacht werden können.

Diese Aufgabe wird durch eine Hybrid-Steckverbindung nach Anspruch 1 gelöst, die erfindungsgemäß dadurch gekennzeichnet ist, dass der RJ-45-Stecker und die Kavität eine bis zu einem hinter dem Gehäuse angeordneten Transceiver reichende Durchführung aufweist, in der eine POF mittels eines Klemmelementes ohne weitere Steckverbinder lösbar fixierbar ist. In einer ersten erfindungsgemäßen Version wird hinter einer RJ-45-Buchse ein POF-Transceiver angeordnet, dessen lichtsendende bzw. lichtempfangende Diode durch eine Öffnung in der RJ-45-Buchsenrückwand zugänglich ist. Durch diese Anordnung des POF-Transceivers wird die Nutzung der RJ-45-Buchse als Kupfer LAN-Port nicht eingeschränkt. Der Anwender kann die "elektrische" RJ-45-Kupferschnittstelle oder alternativ die optische POF-Schnittstelle nutzen.

Vorteilhafterweise können bei dieser Ausführungsform die vorhandenen monolithisch integrierten Switch Bausteine (IC=Integrated Circuit) sowie andere Komponenten weiterhin benutzt werden. Prinzipiell ist zwar eine volle Parallelbenutzung der POF-und der RJ-45 Kupferports möglich, jedoch würde dies Switch ICs mit doppelt so vielen LAN-Ports erfordern, wodurch Preis- und Stromverbrauch entsprechend steigen.

Die hier erfindungsgemäß beschriebene Hybrid-Steckverbindung kann alternativ auch mit Glasfasern oder dünnen POF-Leitern genutzt werden. Dazu ist es erforderlich an einem Glasfaser- oder POF-Ende einen optischen Kollimator anzubringen, der den divergenten optischen Strahl aus dem dünnen Wellenleiter in einen Parallelstrahl im Millimeterbereich transformiert.

Multimode-Fasern besitzen üblicherweise Kerndurchmesser von 50 bzw. 62,5 µm und einen Manteldurchmesser von 125 µm. Bei gleichem äußeren Durchmesser besitzen Singlemode Fasern einen Kerndurchmesser im Bereich von 3 bis 9 µm, wobei die meisten Standardfasern heute bei 9 µm arbeiten. Auch bei den POF-Leitern gibt es solche mit deutlich dünnerem Kern- und Manteldurchmesser und dann in der Regel besseren Übertragungseigenschaften.

Alle dünnen Lichtwellenleitern besitzen den Nachteil der schlechten Handhabbarkeit und machen hochpräzise und damit teure Steckverbinder an den Koppelstellen erforderlich. Die besseren Übertragungseigenschaften dünnerer Lichtwellenleiter bleiben beim Zwischenschalten eines oder auch zweier Kollimatoren weitgehend erhalten. Der Kollimator transformiert den divergenten Lichtstrahl mit geringem Durchmesser in einen parallelen Lichtstrahl mit einem Durchmesser im Millimeterbereich und reduziert damit die Präzisionsanforderungen an die Koppelstelle zwischen Kollimatorstirnfläche und der optischen Sende- bzw. Empfangsdiode im Transceiver drastisch.

In den vergangenen Jahren wurden viele technologische Fortschritte gemacht, die eine preiswerte Herstellung bzw. Anbringung von Kollimatoren an dünne Faserenden ermöglichen. So ist es beispielsweise gelungen mit modifizierten Tintenstrahldruckern eine Kollimatorlinse direkt auf das Ende einer Glasfaser zu spritzen. Zur Herstellung dieser gedruckten Mikrolinsen werden UV-härtende (ultraviolett) optische Epoxide mit geeigneter Brechzahl verwendet, die bei hohen Temperaturen im Spritzverfahren auf das Faserende aufgebracht werden.

Alle nachfolgend vorgeschlagenen Lösungen werden anhand von POF beschrieben, lassen sich jedoch ebenso mittels Glasfasern oder dünnen POF-Leitern mit einem Kollimator am Ende der Faser oder des Leiters realisieren.

Weiterbildungen der vorliegenden Erfindungen sind in den Unteransprüchen beschrieben.

So liegt vorzugsweise die POF mit einem Kabelmantel in einer zum Transceiver hin offenen Röhre, die an mindestens einer Stelle ihres Mantels durchbrochen ist, so dass das Klemmelement dort durchgreifen und vorzugsweise auf den Kabelmantel klemmend einwirken kann. Nach einer weiteren Ausgestaltung der Erfindung übt das Klemmelement im arretierten Zustand auf die POF eine in Einsteckrichtung wirkende Kraft aus, welche die Faserendflächen gegen die POF-Transceiver drückt. Durch das Klemmelement wird gewährleistet, dass die POF-Stirnfläche stets am Transceiver-Signaleingang anliegt.

Nach einer weiteren Ausbildung der Erfindung weist die POF-Röhre bzw. der diese Röhre enthaltende Adapter an ihrem vorderen Ende eine mit dem Transceivergehäuse zusammenwirkenden Rastverschluss auf. Diese Ausführungsform lässt sich preisgünstig herstellen und liefert einen für jeden Benutzer sichere Handhabung.

Das Klemmelement selbst kann als schwenkbare Kunststoff-Feder mit Klemmfingern oder als drehbarer Excenter mit einer rauen oder ein Gewinde aufweisenden Oberfläche ausgebildet sein. In beiden Fällen üben die Klemmfinger oder das Gewinde einen auf den POF-Kabelmantel wirkenden Druck aus, der Längs- oder Querverschiebungen der POF verhindert.

Vorzugsweise ist mit der Steckbuchse ein monolithisch integrierter Ethernet Switch-Baustein verbunden, der eine optische FX- sowie eine Kupfer-TX-PHYbesitzt, deren Ausgangssignale über einen Analogmultiplexer wahlweise an die jeweiligen Anschlussbeine des jeweiligen Ethernetports geschaltet werden.

Sollen zeitlich parallel ein POF-Port und eine RJ-45-Kupferschnittstelle genutzt werden, kann nach einer Weiterbildung der Erfindung ein Ethernet Switch Baustein verwendet werden, der für jeden POF-/RJ-45-Port zwei Ethernet-MACs mit nachgeschalteter TX- bzw. FX-PHY bereitstellt. An die TX-PHY wird dann über einen Transformer die RJ-45 Buchse und über die FX-PHY der optische POF-Transceiver angeschlossen.

Weitere Ausführungsbeispiele sowie Vorteile der vorliegenden Erfindung werden im Folgenden anhand der Zeichnungen erläutert. Es zeigen:

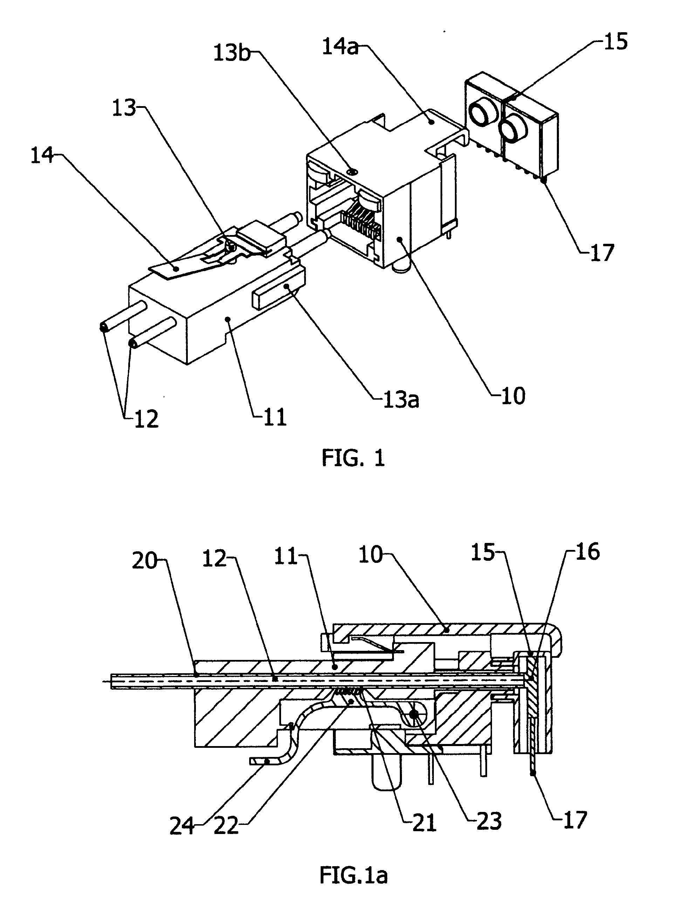

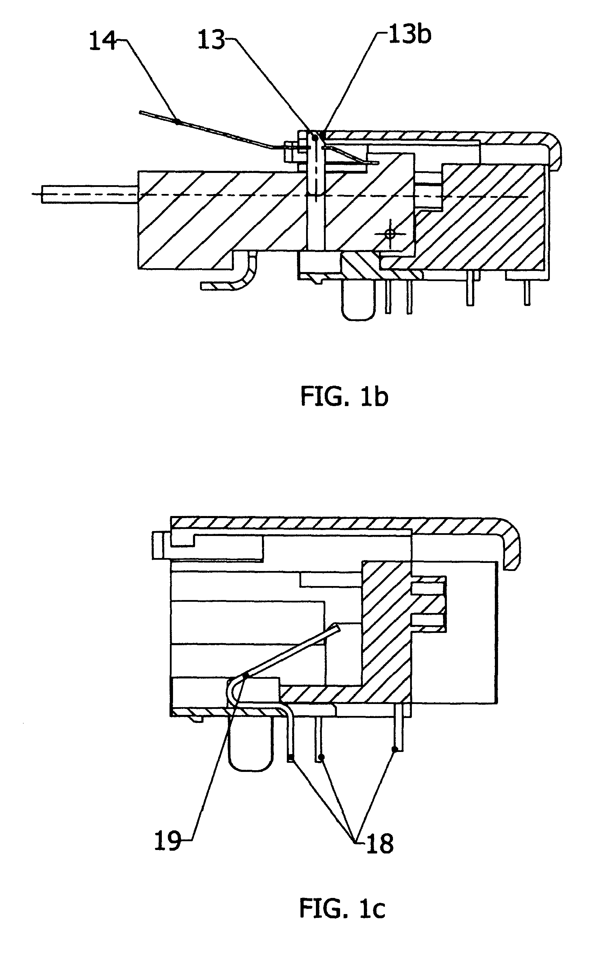

- Fig. 1: eine Explosionszeichnung einer erfindungsgemäßen Steckverbindung,
- Fig. 1 a- c: jeweils Querschnittsansichten der Steckverbindung in gekoppeltem Zustand,
- Fig. 2a, b: Querschnitte durch alternative erfindungsgemäße Ausführungsformen,
- Fig. 2c: einen Querschnitt durch einen Adapter und einen Sender/Empfänger,
- Fig. 3: eine perspektivische Ansicht einer weiteren Ausführungsform und
- Fig. 3a-e: jeweils Detailansichten entsprechend der Ausführungsform nach Fig. 3.
- Fig. 4: ein Blockschaltbild eines POF-RJ-45-Ethernet-Multiplexers und

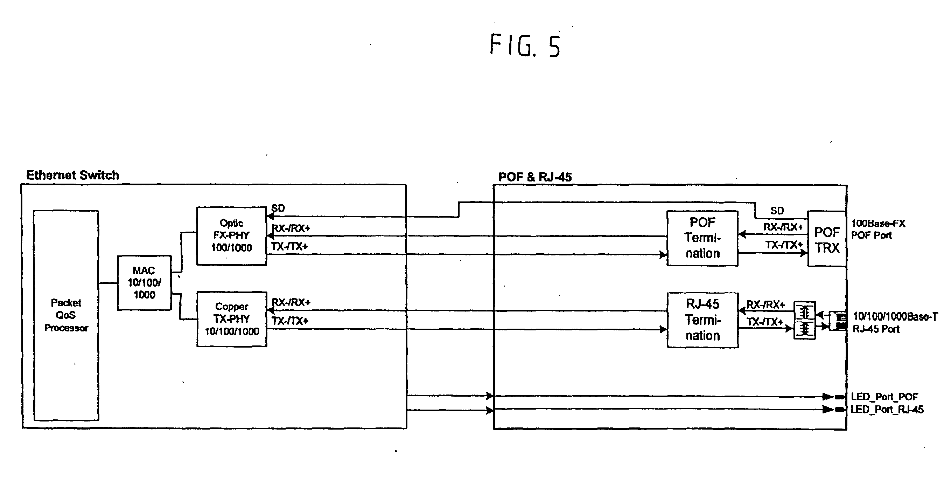

- Fig. 5: ein Blockschaltbild eines Ethernet-Schalters zur alternativen Nutzung der optisch oder elektrisch übertragenen Signale.

Das Grundprinzip der Hybrid-Steckverbindung ist Fig. 1 und Fig.1a bis c zu entnehmen, die eine RJ-45-Buchse 10 sowie einen POF-Adapter 11 mit einer in einer Röhre angeordneten polymeren optischen Faser 12 zeigt. Der POF-Adapter auf einer Seite einen Zapfen 13 sowie eine Feder 14 als Rastmittel für eine entsprechende Ausnehmung einer Aufnahme in der Buchse 10, die einen Federbügel 14a besitzt, der den Transceiver 15, d. h. eine Sende-Empfangseinrichtung festhält. Der Sender/Empfänger IC 16 liegt unmittelbar an der Stirnseite der POF 12 an, so dass über die POF bzw. die beiden vorhandenen POF-Leitungen, die nebeneinander geführt werden, jeweils Lichtsignale empfangen und über eine Leuchtdiode (LED) wieder ausgesandt werden können. Zusätzlich sind Führungen 13a an der Seite des Adapters 11 vorgesehen, die in entsprechenden Nuten der Buchse 10 längsbeweglich exakt führbar sind. Mit Bezugsziffern 17 und 18 werden die jeweiligen elektrischen Anschlussbeine des Transceivers sowie der RJ-45-Schnittstelle bezeichnet. Die elektrischen Anschlussbeine 18 werden über acht nebeneinander liegende Kontaktfedern 19 zu den Kupferkabeln der RJ-45-Buchse geführt. Die Besonderheit der vorliegenden Erfindung liegt darin, dass inmitten der RJ-45-Buchse ein Anschluss für POF-Ports geschaffen wurde, ohne dass ein Gehäuseanbau oder auch zusätzliche Steckverbindungen verwendet werden müssen. Hierbei kann ausgenutzt werden, dass viele Ethernet-Switch ICs bereits in einer Ausführung angeboten werden, bei der jeder Ethernet-LAN-Port wahlweise als Kupfer- oder als optischer Port konfiguriert werden kann. Switchintern besitzt jede Ethernet MAC (Medial Access Control) eine nachgeschaltete 10/100 BASE-TX Kupfer-PHY und eine 100 BASE-FX optische-PHY, die über einen integrierten Multiplexer an die Anschlussbeine des Bausteins geschaltet werden können. Da eine MAC beide PHYs versorgt, kann die Ethernet-Datenverbindung entweder über die TX- oder FX-PHY erfolgen. Dies bedeutet, dass es mit den heute üblichen Halbleiterbausteinen möglich ist, Endgeräte zu realisieren, bei denen alle Ethernet-Schnittstellen sowohl mit der RJ-45-Kupfer als auch mit der optischen POF-Schnittstelle herausgeführt werden. Durch die Anordnung des POF-Transceiver 15 hinter der RJ-45-Buchse 10 wird die Nutzung als Kupfer-LAN-Port nicht eingeschränkt. Das erfindungsgemäße hybride Steckverbindersystem nach Fig. 1 besteht aus der um eine oder mehrere Öffnungen modifizierten RJ-45-Buchse, dem dahinter montierten POF-Transceiver 15 und dem Adapter 11, der anstelle des herkömmlichen RJ-45-Twisted-Pair-Steckers in die RJ-45-Buchse eingeschoben wird. Beim Einschieben dringt der voreilende Teil des Adapters 11 durch die offene RJ-45-Buchsenrückwand bis zum POF-Transceiver 15 vor und rastet präzise über die Rastverbindung 13, 14 ein. Der Transceiver 15 sowie der eingeschobene Adapter 11 bilden eine lösbare Nut-Feder-Verbindung. Die in jeweiligen Röhren geführten zwei POF 12 werden nach Einrasten der Verbindung 13, 14 eine optische Koppelstelle zwischen den POF-Endflächen und den Sende- bzw. Empfangsdioden des POF-Transceiver 15 bilden, die eine minimale Koppeldämpfung aufweist. Die Durchführung der beiden vorhandenen POF 12 zeigt die Fig. 1 a. Die POF 12 besitzt einen Kabelmantel 20, auf den Klemmfinger 21 einwirken, die Bestandteil einer Kunststofffeder 22 sind, die um einen Drehpunkt 23 durch Betätigung des Hebels 24 schwenkbar sind. Die Kunststofffeder ist vorzugsweise in der Stellung, in der der Mantel der POF 12 geklemmt wird, einrastbar.

Anstelle der dargestellten Ausführungsform ist es auch möglich, eine POF mit einer einzigen Faser zu verwenden. In diesem Fall wird anstelle eines getrennten POF-Senders und Empfängers mit getrenntem POF-Zugang ein POF-Transceiver eingesetzt, der über einen integrierten Splitter bzw. Wellenlängenmultiplexer das Sende-und Empfangssignal auf eine gemeinsame POF leitet.

Alternativ können auch POF-Bändchenkabel mit mehr als zwei Fasern (4/8), die entweder aufgetrennt in Einzelfasern durch mehrere einzelne Röhrchen zum Mehrkanal-Transceiver geführt werden oder im Verbund durch einen im Querschnitt rechteckigen oder einen der POF-Mantelsilhouette angepassten Kanal zum Mehrkanal-Transceiver geführt werden.

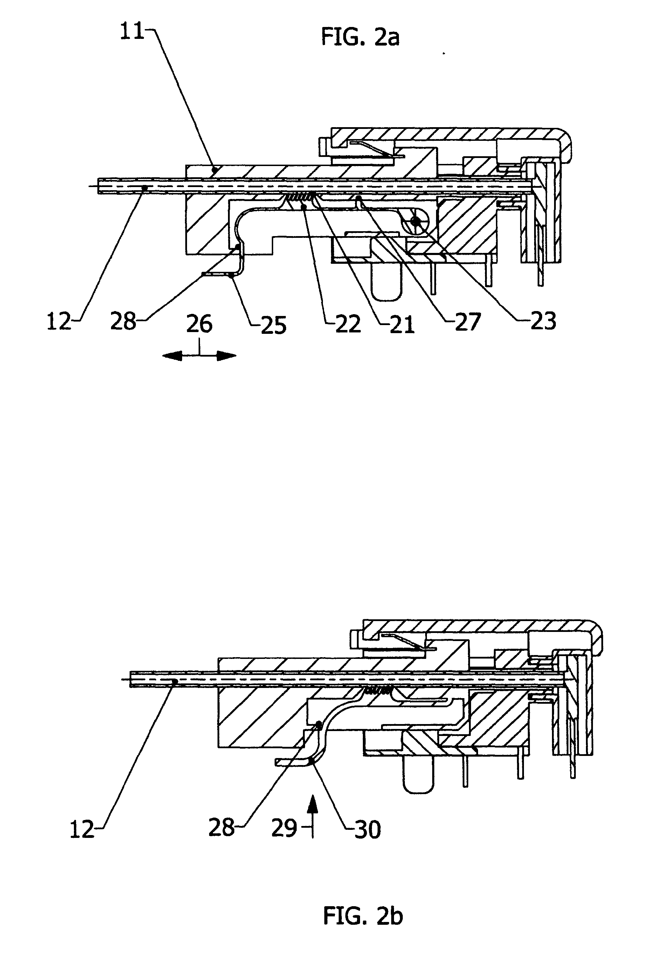

Einen durch Verschiebung entlang eines Doppelpfeils 26 betätigbaren Hebel 25 zeigt Fig. 2a, bei dem zusätzlich Federelemente 27 sowie eine Rastnase 28 vorgesehen sind, um ein Lösen bzw. Festklemmen der Klemmfeder 22 zu bewirken. In ähnlicher Weise arbeitet die Kunststofffeder 28 auf Druck (siehe Fig. 2b, Pfeil 29) auf die Betätigungsplatte 30.

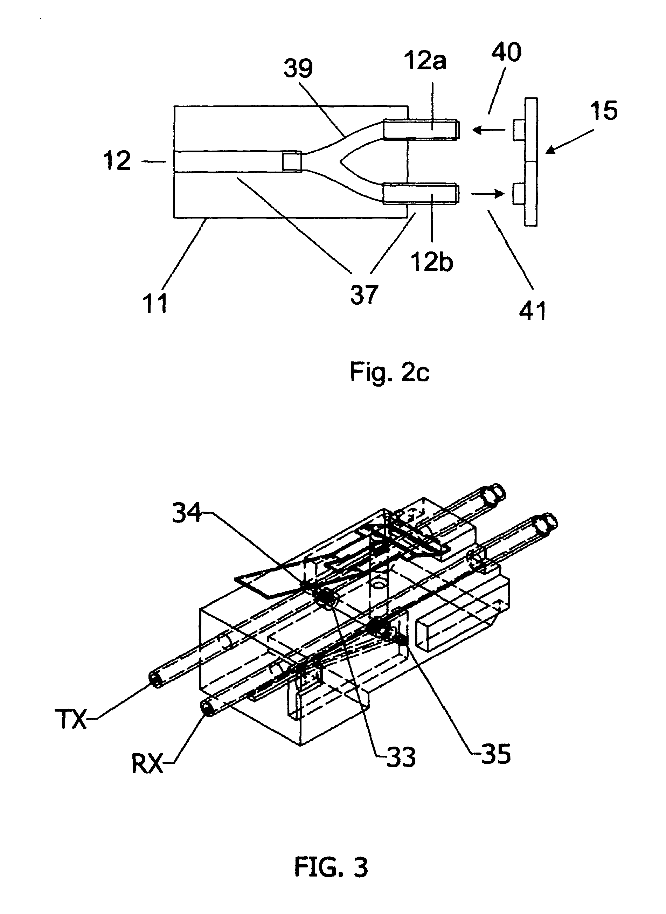

Fig.2c zeigt einen Splitter bzw. Wellenlängenmultiplexer, der in einen Adapter 11 integriert wird. Die beiden dem Transceiver 15 zugewandten POF 12a, 12b werden mit dem Adapter 11 in die RJ-45-Buchse eingeschoben. Sowohl die POF 12 als auch die POF 12a, 12b sind jeweils in ein Röhrchen 37 gesteckt. Des Weiteren sind erkennbar: Splitter 39, Sendesignal 40 und Empfangssignal 41

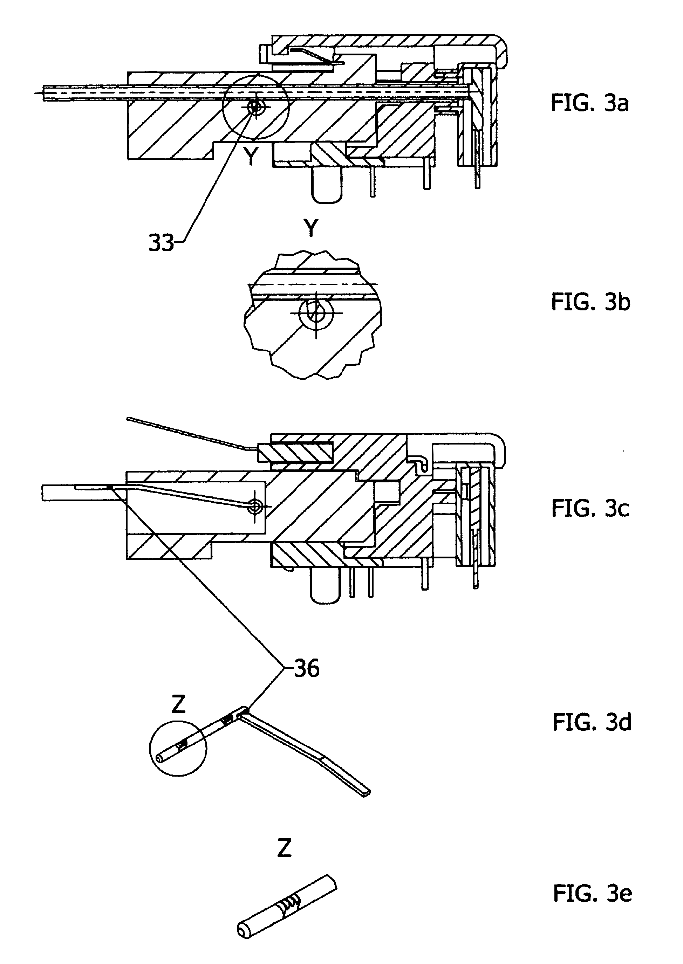

Fig. 3 und 3a bis e stellen einen Klemmmechanismus dar, bei dem ein Klemmelement mit einem drehbaren Exzenter 33, der in zwei Lagern gelagert und über einen Hebel 36 um seine Längsachse schwenkbar ist. Durch Betätigung des Hebels 36 dreht sich der Exzenter 33, wobei seine raue Mantel- oder Gewindefläche auf den Mantel der beiden POF, die als TX- und RX-Leitungen gekennzeichnet sind, fixierend einwirkt. In der Klemmstellung ist entweder über eine Selbsthemmung oder über einen Rastmechanismus ein Feststellen möglich. Die POF 12 bzw. der Kunststoffmantel wird jeweils so geklemmt, dass er federnd in Richtung Transceiver unter einer Zugbelastung steht.

Die Vorteile des Klemmelementes nach Fig. 3 bestehen darin, dass der Metallhebel 33, 36 platzsparend ausgelegt werden kann und dennoch eine hohe Stabilität besitzt. Durch den Hebel 36 ist eine optimale Kraftübertragung möglich, wobei die Metalloberfläche des Exzenters 33 sich bei der Klemmung optimal in den Randzonenbereich des Kunststoffmantels der POF 12 einschneidet. Das Klemmelement benötigt einen minimalen Platzbedarf.

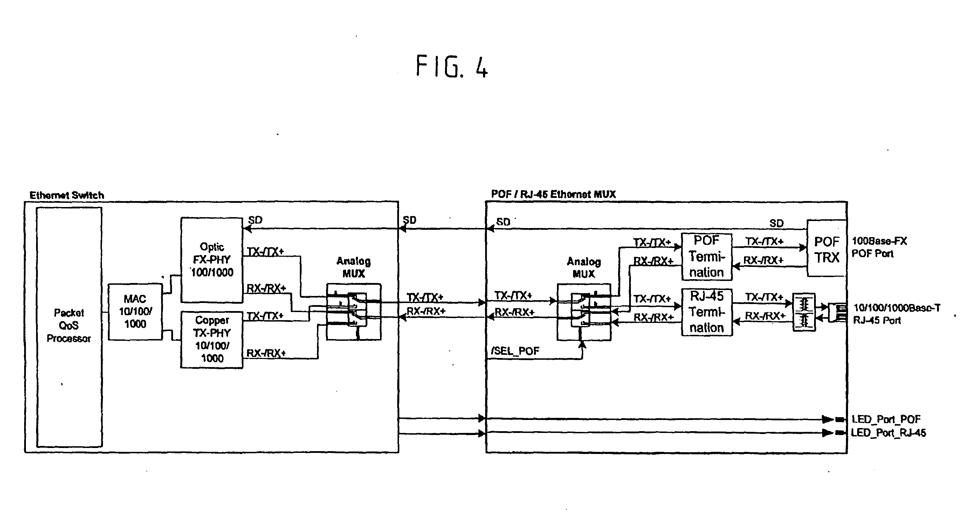

In Fig. 4 ist im Rahmen eines Blockschaltbildes ein monolithisch integrierter Ethernet-Switch-Baustein dargestellt, dessen Ethernet-Ports universell ausgeführt sind, so dass über die gleichen Anschlussbeine entweder ein Ethernet-Transformer mit nachgeschaltetem RJ-45-Anschluss oder ein optischer Transceiver mit optischer Schnittstelle angesteuert werden kann. Dazu verfügen die Ethernet-Switch-Bausteine pro Ethernet-Port über eine optische FX- und eine Kupfer-TX-PHY, deren Ausgangssignale über einen Analog-Multiplexer (MUX) wahlweise an die Anschlussbeine des jeweiligen Ethernet-Ports geschaltet werden. Über interne Switch-Register kann die Schalterstellung des Analog-Multiplexers gewählt und damit der Ethernet-Port als optischer oder elektrischer Port festgelegt werden.

Die über gemeinsame Anschlussbeine gemultiplexten Ethernetsignale (TX-, TX+, RX-, RX+, SD) können nicht gleichzeitig über einen Ethernettransformator die RJ-45-Kupferschnittstelle und parallel den POF-Transceiver versorgen. Es sind unterschiedliche Terminierungen der differenziellen Sende- (TX+/TX-) und Empfangsleitungen (RX+/RX-) notwendig. Die optischen Transceiver werden in der Regel über einen Kondensator mit der PHY verbunden (AC-Kopplung), während die Kupfer-PHY per DC-Kopplung mit dem Ethernet-Transformer verbunden sind. Der Ethernet-Switch-Baustein in Fig. 4 zeigt exemplarisch die Beschaltung eines Ethernet-MAC-Ports mit einer TX- und einer FX-PHY. Gängige Switch-Bausteine besitzen mindestens zwei, in der Regel aber fünf, sechs, acht, zwölf, vierundzwanzig oder achtundvierzig Ethernet-Ports. Die in Fig. 4 dargestellte MAC ist parallel mit einer TX- und einer FX-PHY verbunden, die wiederum einen nachgeschalteten Analog-Multiplexer versorgen. Die differenziellen Sendesignale der beiden PHY's werden über den oberen Multiplexkanal auf die gemeinsamen Sendeleitungen (TX-/TX+) geschaltet und die differenziellen Empfangssignale gelangen über die gemeinsamen Switch-Anschlussbeine (RX-/RX+) und den unteren Multiplexkanal auf die Kupfer- oder Optik-PHY. Möchte man über diese gemultiplexten Anschlussbeine erfindungsgemäß einen optischen POF-Transceiver und parallel dazu über einen Transformator einen RJ-45-Port mit Ethernetdatenpaketen speisen, so ist es erforderlich, einen weiteren Analog-Multiplexer zu verwenden, um die Ethernetsignale der Kupfer- bzw. Optik-PHY wieder getrennt verfügbar zu machen.

Im POF-RJ-45-Ethernet-Multiplexer werden die auf gemeinsamen Anschlussbeinen der switch-gemultiplexten Signale über einen breitbandigen Analog-Multiplexer wieder aufgesplittet. Hierbei gelangen die differenziellen Sende- und Empfangssignale vom Switch auf den Analog-Multiplexer, der diese Signale in Abhängigkeit vom Logikpegel des Steuersignals (/SEL_POF) über das POF-Terminierungsnetzwerk zum POF-Transceiver (POF TRX) oder über das RJ-45-Terminierungsnetzwerk und den Ethernet-Transformator zur RJ-45-Buchse durchschaltet. Es gibt kleine integrierte Halbleiterbausteine, die diese Funktion in einem Chip kostengünstig realisieren lassen und für alle Ethernet-Datenraten bis Gigabit Ethernet geeignet sind. Im dargestellten Blockschaltbild sind die RJ-45-Buchse und der POF-Transceiver übereinander gezeichnet, wie Fig. 1 zu entnehmen, liegen jedoch die beiden Teile hintereinander, wobei die POF durch den in die RJ-45-Buchse eingesteckten POF-Adapter an den POF-Transceiver 15 gelangt.

In einer weiteren Ausführungsform der Erfindung ist der Transceiver 15 in die RJ-45-Buchse integriert, d. h. in den hinteren Teil des RJ-45-Kunststoffgehäuses fest eingebaut. Eine solche zweiteilige Ausführungsform hat mehrere Vorteile. Zum einen wird durch Einsparung eines separaten Bauteils eine kostengünstigere Produktion ermöglicht. Des Weiteren ist nur ein gemeinsames Schirmblech für die RJ-45-Buchse und den POF-Transceiver erforderlich, so dass Kontaktierungsprobleme zwischen der RJ-45- und der Transceiver-Schirmung vermieden werden.

Schließlich erhöht die starre mechanische Kopplung zwischen der RJ-45-Buchse und dem POF-Transceiver die Präzision und Produzierbarkeit der mechanischen Adapter-Transceiver-Ankopplung.

Die letztgenannte Variante kann in verschiedenen Ausführungsformen gebaut werden. In einer ersten Ausführungsform wird der Kunststoffkörper einer vorhandenen RJ-45-Buchse nach hinten verlängert und erhält dort zwei Kammern, in die ein POF-Sender und ein POF-Empfänger eingeschoben und eingerastet werden können. Solche Sender und Empfänger können als kleinvolumige, in Kunststoff eingegossene bedrahtete Bauelemente gebaut werden. Die bei RJ-45 nach dem Stand der Technik üblichen Abschirmbleche, die aus einem Stück gefaltet sind, werden verlängert, so dass sie den gesamten Plastikkörper des POF-Senders oder -Empfängers einschließen. Bei dieser Lösung werden die Abmessungen der RJ-45-Front und die Lage der Anschlussbeine bzw. das RJ-45-Foot print kompatibel zur RJ-45-Buchse ohne integrierten POF-Transceiver gehalten. Für den Gerätehersteller ergibt sich der Vorteil, dass er ohne Änderungen an einem vorhandenen Endgerätegehäuse lediglich durch eine Bestückungsänderung der Leiterkarte RJ-45-LAN-Ports oder hybride RJ-45-/POF-Ports anbieten kann. Die hybriden RJ-45-Buchsen mit integriertem POF-Transceiver werden wie bei RJ-45-Buchsen üblich, in einfacher, zweifacher, vierfacher und achtfacher Ausführung realisiert. Diese hybriden Mehrfachbuchsen ermöglichen es, Ethernet-Switche zu bauen, die in einer 19 Zoll-Höheneinheit bis zu 48 hybride RJ-45-POF-Ports realisieren. In dieser Variante wird der erforderliche Analog-Multiplexer auf der Leiterkarte zwischen dem Switch-Baustein und dem hybriden Steckverbindersystem platziert.

In einer weiteren Alternative kann der Analog-Multiplexer zusammen mit dem POF-Transceiver, dem Ethernet Transformer und der RJ-45-Buchse zu einem Bauteil vereint werden. Der Vorteil dieser Lösung liegt in der geringeren Anzahl an Anschlussbeinen, dem Wegfall von Einzelbauteilen und der Möglichkeit der kompletten Schirmung über alle integrierten Komponenten, was wiederum zu einer besseren elektromagnetischen Verträglichkeit führt.

Insgesamt ergeben sich durch die hybride Steckverbindung folgende Vorteile:
- Das hybride Steckverbindersystem für wahlweisen Kupfer- oder POF-Anschluss kann preiswert hergestellt werden.
- Die hybride Lösung benötigt lediglich den Flächenbedarf auf der Frontplatte wie die Standard RJ-45-Buchse. In einer 19-Zoll-Höheneinheit können bis zu 48 hybride RJ-45/POF-Port realisiert werden.
- Die hybride Steckverbindung kann sowohl als Einzel- als auch Mehrfachsteckverbindersystem ausgeführt werden.
- Die Leiterkarte kann so ausgelegt werden, dass wahlweise der hybride als auch der rein elektrische RJ-45-Steckverbinder mit integriertem Ethernet-Transformator bestückt werden kann.
- Eine Umschaltung zwischen elektrischem und optischem Port ist preiswert über monolithisch integrierte Analog-Multiplexer möglich.
- Weitere Preisreduktionen ergeben sich, wenn monolithisch integrierte Switch-Bausteine mit getrennt herausgeführten Anschlussbeinen (siehe Fig. 4) für den optischen und elektrischen Ethernet-Port realisiert werden.
- Die POF kann über einen preiswerten Kunststoffadapter direkt eingeklemmt werden, ein spezieller POF-Stecker ist nicht erforderlich.
- Ohne weiteren Steckverbinder steht eine vollkommen kompatible RJ-45-Buchse zur Verfügung, bei der auch die vorhandenen LED in den Ecken der Buchse erhalten bleiben.

## Patentansprüche

1. Hybrid-Steckverbindung mit einem Gehäuse, dass eine Kavität für die Aufnahme eines normierten RJ-45-Steckers aufweist, der entlang einer Steckrichtung einsteckbar ist, und dass eine zusätzliche Aufnahme für mindestens ein weiteres optisches Kabel, das beispielsweise aus einer Polymer Optischen Faser (POF) besteht oder eine zusätzliche Aufnahme für mindestens einen Kollimator mit angeschlossenem Lichtwellenleiter aufweist, das mit einem Transceiver durch eine Schubbewegung entlang derselben Steckrichtung verbindbar ist,
**dadurch gekennzeichnet, dass**
der RJ-45-Stecker und die Kavität eine bis zu einem hinter dem Gehäuse (10) angeordneten Transceiver (15) reichende Durchführung aufweisen, in der ein optisches Kabel, nämlich eine POF (12) oder ein Kollimator mit angeschlossenem Lichtwellenleiter mittels eines Klemmelementes ohne weitere Steckverbinder lösbar fixierbar ist.

2. Hybrid-Steckverbindung nach Anspruch 1, **dadurch gekennzeichnet, dass** das optische Kabel, nämlich die POF (12) oder der Kollimator mit einem Kabel- oder sonstigen Mantel (20) in einer zum Transceiver (15) hin offenen Röhre liegt, die an mindestens einer Stelle ihres Mantels durchbrochen ist, so dass das Klemmelement dort durchgreifen und vorzugsweise auf den Mantel klemmend einwirken kann.

3. Hybrid-Steckverbindung nach Anspruch 1 oder 2, **dadurch gekennzeichnet, dass** das Klemmelement im arretierten Zustand auf das optische Kabel, nämlich die POF (12) oder den Kollimator eine in Richtung Transceiver wirkende Kraft ausübt.

4. Hybrid-Steckverbindung nach einem der Ansprüche 2 oder 3, **dadurch gekennzeichnet, dass** die optische Kabel- oder Kollimatorröhre an ihrem vorderen Ende einen mit dem Transceiver-Gehäuse zusammenwirkenden Rastverschluss (13, 14) aufweist.

5. Hybrid-Steckverbindung nach einem der Ansprüche 1 bis 4, **dadurch gekennzeichnet, dass** das Klemmelement eine schwenkbare Kunststofffeder (22, 28, 31) mit Klemmfingern (21) oder einen drehbaren Exzenter (33) mit einer rauen oder ein Gewinde aufweisenden Oberfläche ist.

6. Hybrid-Steckverbindung nach einem der Ansprüche 1 bis 5, **dadurch gekennzeichnet, dass** die Steckbuchse über einen Analog-Multiplexer mit einem monolithisch integrierten Ethernet-Switch-Baustein verbunden ist, der eine optische FX- sowie eine Kupfer-TX-PHY besitzt, deren Ausgangssignale über einen integrierten Analog-Multiplexer wahlweise an die jeweiligen Anschlussbeine des jeweiligen Ethernet-Ports geschaltet werden.

7. Hybrid-Steckverbindung nach einem der Ansprüche 1 bis 5, **dadurch gekennzeichnet, dass** die Steckbuchse ohne zwischengeschalteten Analog-Multiplexer direkt mit der optischen FX- sowie der Kupfer-TX-PHY eines monolitisch integrierten Ethernet-Switch- Bausteines ohne gemultiplexte TX-/FX-Anschlussbeine verbunden ist, wobei lediglich eine MAC für die TX- und FX-PHY in den Switch-Baustein integriert ist.

8. Hybrid-Steckverbindung nach einem der Ansprüche 1 bis 5, **dadurch gekennzeichnet, dass** die Steckbuchse ohne zwischengeschalteten Analog-Multiplexer direkt mit der optischen FX- sowie der Kupfer-TX-PHY eines monolitisch integrierten Ethernet-Switch- Bausteines ohne gemultiplexte TX-/FX-Anschlussbeine verbunden ist, wobei eine MAC für die TX-und eine weitere MAC für die FX-PHY in den Switch-Baustein integriert ist.

9. Hybrid-Steckverbindung nach einem der Ansprüche 1 bis 8, **dadurch gekennzeichnet, dass** der Transceiver in die RJ-45-Buchse integriert ist.
